# EUROPEAN PATENT APPLICATION

(11) **EP 4 722 047 A1**
(43) Date of publication of application: **08.04.2026**
(21) Application number: 25202696.8
(22) Date of filing: 17.09.2025
(51) Int. Cl.: B60R 16/02

(54) **SEAL ASSEMBLY**

(30) Priority: 04.10.2024 US 202418906201
(71) Applicant: Aptiv Technologies AG, 8200 Schaffhausen (CH)
(72) Inventor: PETERSON, David R., 8200 Schaffhausen (CH); LEWIS, Ryan, 8200 Schaffhausen (CH); SIEGFRIED, David, 8200 Schaffhausen (CH); BILAS, Jared, 8200 Schaffhausen (CH); SUDIK JR., Joseph, 8200 Schaffhausen (CH)
(74) Representative: Bardehle Pagenberg Partnerschaft mbB Patentanwälte Rechtsanwälte

(57) **Abstract**

A seal assembly includes a first retainer and a second retainer. The first retainer includes a first base having a first inner surface defining a first aperture and a protrusion extending from the first inner surface. The second retainer is configured for removable connection with the first retainer and includes a second base having an outer surface, a second inner surface opposite the outer surface, and an end surface extending between the outer surface and the second inner surface. The second inner surface defines a second aperture. The end surface defines an opening configured to receive the protrusion. The outer surface defines a groove in communication with the opening and configured to translatablyreceive the protrusion upon rotation of the second retainer relative to the first retainer.

## Description

### FIELD

The present disclosure relates to a seal assembly and more particularly to a seal assembly that may be used with a vehicle.

### BACKGROUND

Modem vehicles rely on electrical wiring and connections to facilitate communication between various electronic components within the vehicle. The integrity of these connections is crucial for the vehicle's overall reliability and performance. Seal assemblies in connector systems enhance this integrity by protecting electrical connections from environmental factors that can lead to degradation. Incorporating seal assemblies not only improves the durability of the connections but also ensures consistent performance in demanding conditions. These assemblies help maintain the reliability of critical systems, which ultimately contributes to safer and more efficient vehicle operation. While known seal assemblies for vehicle connection systems have proven acceptable for their intended purpose, a continuous need for improvement remains in the pertinent art to adhere to the strenuous testing requirements for vehicle connections systems.

The background description provided here is for the purpose of generally presenting the context of the disclosure. Work of the presently named inventors, to the extent it is described in this background section, as well as aspects of the description that may not otherwise qualify as prior art at the time of filing, are neither expressly nor impliedly admitted as prior art against the present disclosure.

### SUMMARY

One aspect of the disclosure provides a retainer for a seal assembly. The retainer includes a base having an inner surface defining an aperture, a protrusion extending from the inner surface, and a flange extending outwardly from the base. The flange defines an outer surface including opposing flat surfaces.

Another aspect of the disclosure provides a retainer for a seal assembly. The retainer includes a base and a flange. The base includes an outer surface, an inner surface opposite the outer surface, and an end surface extending between the outer surface and the inner surface. The inner surface defines an aperture. The end surface defines an opening. The outer surface defines a groove in communication with the opening. The flange extends outwardly from the base. The flange defines a second outer surface. The second outer surface includes opposing flat surfaces.

Yet another aspect of the disclosure provides a seal assembly. The seal assembly includes a first retainer and a second retainer. The first retainer includes a first base having a first inner surface defining a first aperture and a protrusion extending from the first inner surface. The second retainer is configured for removable connection with the first retainer and includes a second base having an outer surface, a second inner surface opposite the outer surface, and an end surface extending between the outer surface and the second inner surface. The second inner surface defines a second aperture. The end surface defines an opening configured to receive the protrusion. The outer surface defines a groove in communication with the opening and configured to translatably-receive the protrusion upon rotation of the second retainer relative to the first retainer.

Further areas of applicability of the present disclosure will become apparent from the detailed description, the claims, and the drawings. The detailed description and specific examples are intended for purposes of illustration only and are not intended to limit the scope of the disclosure.

### BRIEF DESCRIPTION OF THE DRAWINGS

The present disclosure will become more fully understood from the detailed description and the accompanying drawings.
FIG. 1 is an exploded view of an example seal assembly in accordance with the principles of the present disclosure.
FIG. 2 is a perspective view of an example first retainer of the seal assembly of FIG. 1 in accordance with the principles of the present disclosure.
FIG. 3 is a front view of the first retainer of FIG. 2.
FIGS. 4 and 5 are perspective views of an example second retainer of the seal assembly of FIG. 1 in accordance with the principles of the present disclosure.
FIG. 6 is a front view of the second retainer of FIGS. 4 and 5.
FIG. 7 is a perspective view of the seal assembly of FIG. 1 being assembled in accordance with the principles of the present disclosure.
FIG. 8 is a perspective view of the seal assembly of FIG. 1 in an assembled configuration in accordance with the principles of the present disclosure.
FIG. 9 is a cross-sectional view of the seal assembly of FIG. 8 taken through the line IX-IX in accordance with the principles of the present disclosure.

In the drawings, reference numbers may be reused to identify similar and/or identical elements.

### DETAILED DESCRIPTION

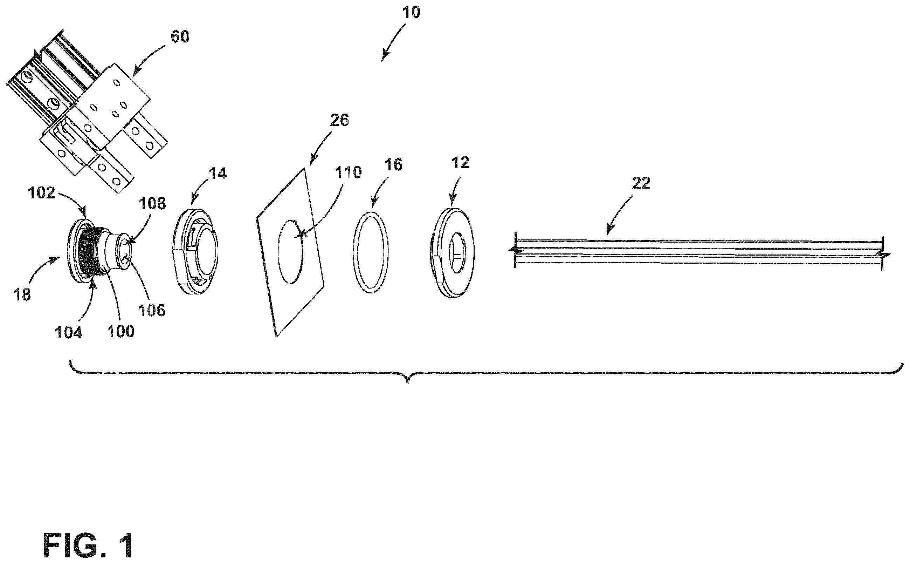

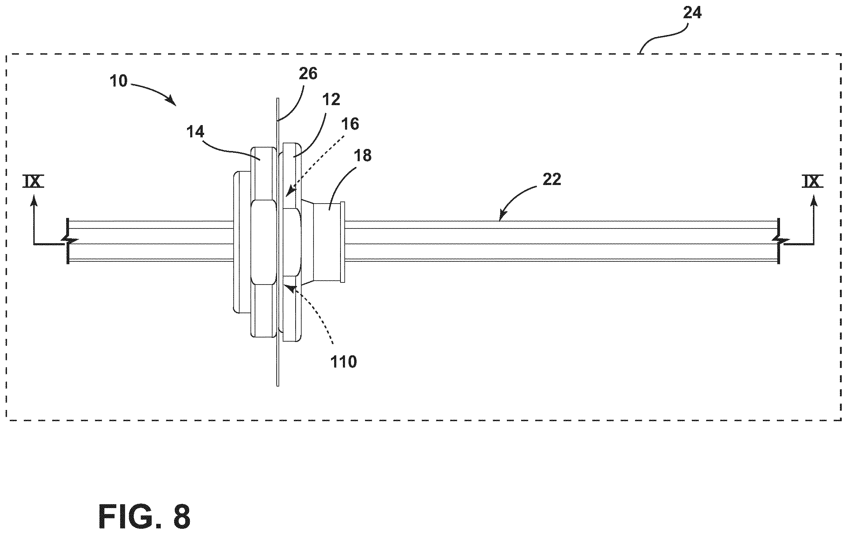

With reference to FIGS. 1 and 8, an example seal assembly 10 is shown. In various implementations, the seal assembly 10 may include a first retainer 12, a second retainer 14, at least one annular seal 16, and/or a third retainer 18, among others. In various implementations, in an assembled configuration, at least a portion of a wiring assembly 22 may be disposed in the seal assembly 10. The seal assembly 10 protects the wiring assembly 22 from environmental conditions when the wiring assembly 22 is disposed in the seal assembly 10.

In various implementations, the seal assembly 10 may be disposed in a vehicle 24 (e.g., an automobile, etc.). As will be explained in more detail below, the seal assembly 10 may be connected to a substrate 26. The substrate 26 may be a component, a surface, a panel, or a module of the vehicle 24.

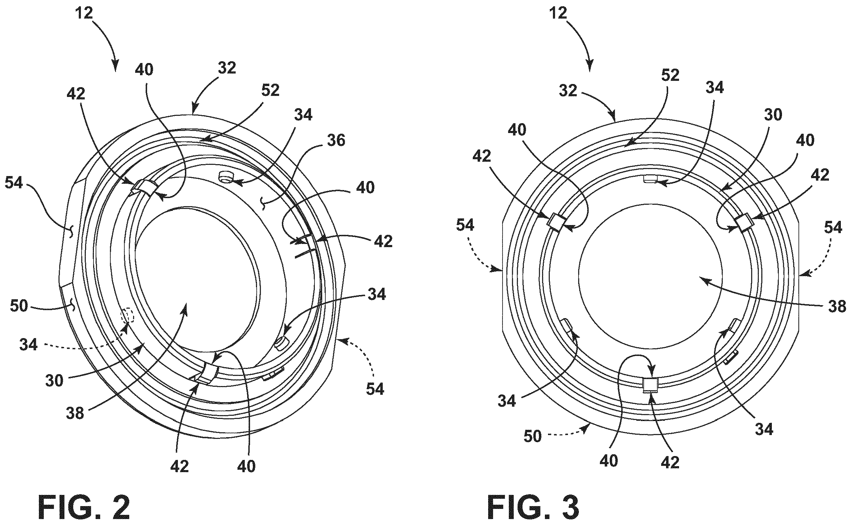

With reference to FIGS. 2 and 3, an example first retainer 12 is shown. In various implementations, the first retainer 12 may comprise one or more of a variety of shapes, sizes, configurations, and/or materials. The first retainer 12 may removably connect with the second retainer 14, an annular seal 16, and/or the substrate 26, among others.

In some example configurations, the first retainer 12 may include a base 30, a flange 32 extending outwardly from the base 30, and a set of protrusions 34, among others. In various implementations, the base 30 may include an inner surface 36 that defines an aperture 38. The aperture 38 may receive portions of the second retainer 12, the third retainer 18, and/or the wiring assembly 22. The protrusions 34 may extend from the inner surface 36. As will be explained in more detail below, the protrusions 34 may be received by corresponding portions of the second retainer 14. While the first retainer 12 is generally depicted as including three protrusions 34, the first retainer 12 may include more or less than three protrusions 34 within the scope of the present disclosure.

In various implementations, the base 30 may include a set of flexible locking arms 40. Each locking arm 40 may include an outwardly-extending tab 42. The tab 42 may engage the substrate 26. In the assembled configuration, the locking arms 40 inhibit removal of the first retainer 12 from the substrate 26. While the first retainer 12 is generally depicted as including three locking arms 40, the first retainer 12 may include more or less than three locking arms 40 within the scope of the present disclosure.

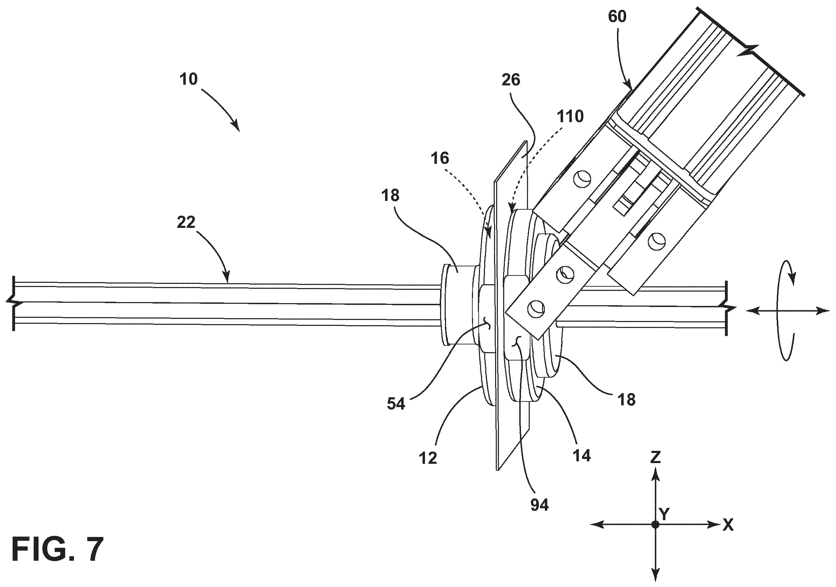

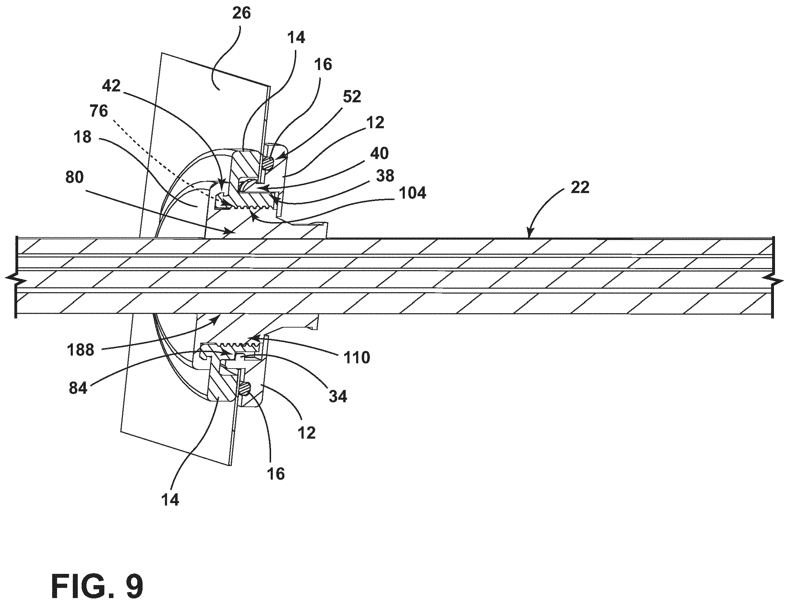

In various implementations, the flange 32 may define an outer surface 50 and a channel 52, among others. In various implementations, the outer surface 50 may include opposing flat surfaces 54. As will be explained in more detail below, the flat surfaces 54 may be engaged by a robot 60, for example, when the first retainer 12 is being connected to the substrate 26 and/or the second retainer 14, among others (see, e.g., FIG. 7). In various implementations, the channel 52 may receive at least a portion of the annular seal 16 (see, e.g., FIG. 9).

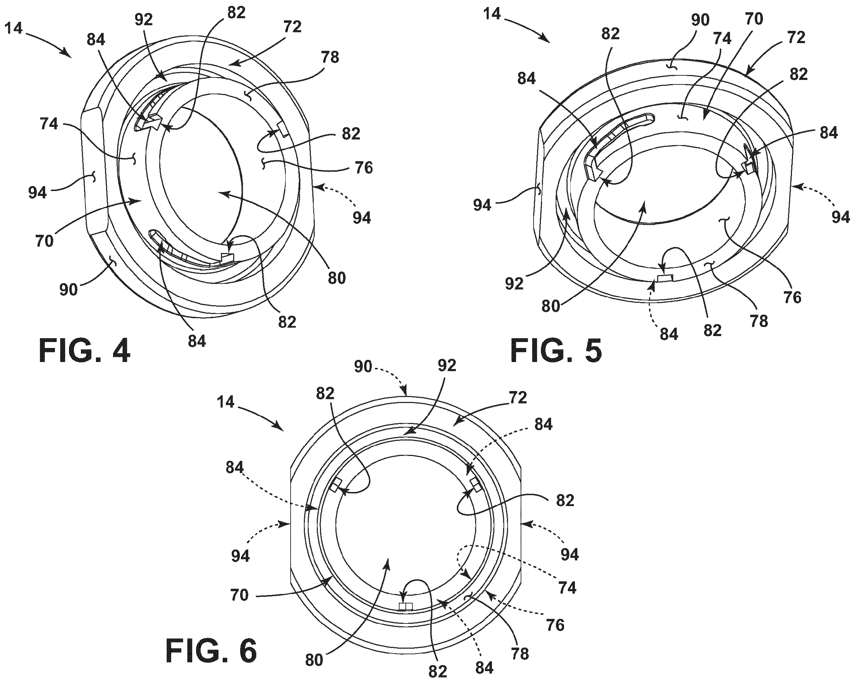

With reference to FIGS. 4-6, an example second retainer 14 is shown. In various implementations, the second retainer 14 may comprise one or more of a variety of shapes, sizes, configurations, and/or materials. The second retainer 14 may removably connect with the first retainer 12, an annular seal 16, and/or the third retainer 18, among others.

In some example configurations, the second retainer 14 may include a base 70 and a flange 72 extending outwardly from the base 70, among others. The base 70 may include an outer surface 74, an inner surface 76 opposite the outer surface, and an end surface 78 extending between the outer surface 74 and the inner surface 76.

In various implementations, the inner surface 76 may define an aperture 80. The aperture 80 may receive portions the third retainer 18, and/or the wiring assembly 22. In various implementations, the end surface 78 may define a set of openings 82. Each opening 82 may receive a respective protrusion 34 of the first retainer 12. In various implementations, the outer surface 74 may define a set of grooves 84. Each groove 84 may be in communication with a respective opening 82. As will be explained in more detail below, each groove 84 may translatably-receive a respective protrusion 34, for example, upon rotation of the second retainer 14 relative to the first retainer 12.

In various implementations, the number of openings 82 and grooves 84 corresponds to the number of protrusions 34 of the first retainer 12. While the second retainer 14 is generally depicted as including three openings 82 and grooves 84, the second retainer 14 may include more or less than three openings 82 and grooves 84 within the scope of the present disclosure.

In various implementations, the flange 72 may define an outer surface 90 and a channel 92, among others. In various implementations, the outer surface 90 may include opposing flat surfaces 94. As will be explained in more detail below, the flat surfaces 94 may be engaged by a robot 60, for example, when the second retainer 14 is being connected to the first retainer 12, among others (see, e.g., FIG. 7). In various implementations, the channel 92 may receive at least a portion of the annular seal 16.

Referring again to FIG. 1, in various implementations, the annular seal 16 may comprise one or more of a variety of shapes, sizes, configurations, and/or materials. The seal 16 may removably connect to the first retainer 12, the second retainer 14, and the third retainer 18, among others. In some example configurations, the seal 16 may define a ring-shaped configuration. In some example configurations, a seal assembly 10 may include a set of annular seals 16. For example, a seal 16 may be connected to the first retainer 12, a seal 16 may be connected to the second retainer 14, and/or a seal 16 may be connected to third retainer 18.

With continued reference to FIG. 1, in various implementations, the third retainer 18 may comprise one or more of a variety of shapes, sizes, configurations, and/or materials. In some example configurations, the third retainer 18 may be a seal. The third retainer 18 may removably connect with the first retainer 12 and/or the second retainer 14, among others.

In some example configurations, the third retainer 18 may include a base 100, a flange 102 extending outwardly from the base 100, and a set of ribs 104 among others. In various implementations, the base 100 may include an inner surface 106 that defines an aperture 108. The aperture 108 may receive portions of the wiring assembly 22.

In various implementations, the ribs 104 may extend outwardly from the base 100. In some example configurations, each rib of the set of ribs 104 may extend continuously and uninterrupted along the entire perimeter of the base 100. With reference to FIG. 9, in the assembled configuration, the ribs 104 may engage the second retainer 14, for example, to inhibit contaminants from contacting the wiring assembly 22.

Referring now to FIG. 7, in various implementations, seal assemblies 10 may be assembled by a robot 60. In various implementations, using the robot 60 to assemble the components of a seal assembly 10 provides various benefits. For example, the robot 60 enables the assemblies 10 to be assembled with consistent precision and accuracy, which enhances the effectiveness of a seal assembly 10 against environmental factors. This reduces the risk of moisture, dust, and/or other contaminants from compromising the wiring assembly 22 disposed in the seal assembly 10 and electrical connections connected to the wiring assembly 22. Further, the robot 60 assembles a seal assembly 10 at a high speed, which increases production efficiency and reduces assembly time. Additionally, the robot 60 maintains strict quality control, which minimizes defects of a seal assembly 10. This leads to improved reliability and performance of the electrical connections protected by a seal assembly 10, which ultimately contributes to the longevity and safety of a vehicle 24.

In various implementations, an example method of assembling a seal assembly 10 may include connecting an annular seal 16 to the first retainer 12. The seal 16 may be inserted, by the robot 60, into the channel 52 of the first retainer 12. In various implementations, the method may include connecting, by the robot 60, the first retainer 12 to the substrate 26. In some instances, the robot 60 may engage the flat surfaces 54 of the first retainer 12 and may insert (e.g., in the X-direction) the first retainer 12 into an aperture 110 of the substrate 26 such that the locking arms 40 of the first retainer 12 engage the substrate 26.

In various implementations, the method may include connecting, by the robot 60, the second retainer 14 to the first retainer 12. For example, the robot 60 may engage the flat surfaces 94 of the second retainer 14 and may insert (e.g., in the X-direction) the second retainer 14 into the first retainer 12 such that a portion of the second retainer 14 is disposed in the aperture 38 of the first retainer 12 and each protrusion 34 of the first retainer 12 is disposed in a respective opening 82 of the second retainer 14. In some examples, the third retainer 18 may be connected to the second retainer 14 prior to the second retainer 14 being connected to the first retainer 12.

In various implementations, the method may include locking the second retainer 14 to the first retainer 12. For example, the robot 60 may rotate (e.g., in a clockwise direction) the second retainer 14 relative to the first retainer 12 such that each protrusion 34 of the first retainer 12 moves along a respective groove 84 of the second retainer 14 from an unlocked position to a locked position. In some examples, a protrusion 34 is in the locked position when the protrusion 34 reaches a terminal end of the groove 84. The robot 60 may engage the flat surfaces 94 of the second retainer 14 when the robot 60 rotates the second retainer 14.

The method may include inserting (e.g., in the X-direction), by the robot 60, the third retainer 18 into the second retainer 14 such that a portion of the third retainer 18 is disposed in the aperture 80 of the second retainer 14 and the ribs 104 of the third retainer 18 engage the inner surface 76 of the second retainer 14. In various implementations, the method may include inserting (e.g., in the X-direction), by the robot 60, the wiring assembly 22 into the third retainer 18 such that the wiring assembly 22 is disposed in the aperture 108 of the third retainer 18.

With reference to FIGS. 8 and 9, the seal assembly 10 is shown in the assembled configuration. In various implementations, the first retainer 12 may be connected to the second retainer 14, the annular seal 16, and the substrate 26, among others. The locking arms 40 of the first retainer 12 may engage the substrate 26 such that the first retainer 12 is inhibited from moving out of the aperture 110 of the substrate 26. The seal 16 may be disposed in the channel 52 of the first retainer 12 and may engage the substrate 26. In various implementations, the substrate 26 surrounds portions of the first retainer 12 and the second retainer 14 (e.g., bases 30, 70), among others.

In various implementations, each protrusion 34 of the first retainer 12 may be disposed in a respective groove 84 of the second retainer 14. Each protrusion 34 may be disposed in the locked position in a respective groove 84 such that the second retainer 14 is inhibited from detaching from the first retainer 12. Portions of the second retainer 14 may be disposed in the aperture 38 of the first retainer 12. In various implementations, portions of the third retainer 18 may be disposed in the aperture 80 of the second retainer 12 such that the ribs 104 of the third retainer 18 engage the inner surface 76 of the second retainer 14.

The foregoing description is merely illustrative in nature and is in no way intended to limit the disclosure, its application, or uses. The broad teachings of the disclosure can be implemented in a variety of forms. Therefore, while this disclosure includes particular examples, the true scope of the disclosure should not be so limited since other modifications will become apparent upon a study of the drawings, the specification, and the following claims. In the written description and claims, one or more steps within a method may be executed in a different order (or concurrently) without altering the principles of the present disclosure. Similarly, one or more instructions stored in a non-transitory computer-readable medium may be executed in a different order (or concurrently) without altering the principles of the present disclosure. Unless indicated otherwise, numbering or other labeling of instructions or method steps is done for convenient reference, not to indicate a fixed order.

Further, although each of the embodiments is described above as having certain features, any one or more of those features described with respect to any embodiment of the disclosure can be implemented in and/or combined with features of any of the other embodiments, even if that combination is not explicitly described. In other words, the described embodiments are not mutually exclusive, and permutations of one or more embodiments with one another remain within the scope of this disclosure.

The terminology used herein is for the purpose of describing particular exemplary configurations only and is not intended to be limiting. As used herein, the singular articles "a," "an," and "the" may be intended to include the plural forms as well, unless the context clearly indicates otherwise. The terms "comprises," "comprising," "including," and "having," are inclusive and therefore specify the presence of features, steps, operations, elements, and/or components, but do not preclude the presence or addition of one or more other features, steps, operations, elements, components, and/or groups thereof. The method steps, processes, and operations described herein are not to be construed as necessarily requiring their performance in the particular order discussed or illustrated, unless specifically identified as an order of performance. Additional or alternative steps may be employed.

Spatial and functional relationships between elements (for example, between modules, circuit elements, semiconductor layers, etc.) are described using various terms, including "connected," "engaged," "coupled," "adjacent," "next to," "on top of," "above," "below," and "disposed." Unless explicitly described as being "direct," when a relationship between first and second elements is described in the above disclosure, that relationship encompasses a direct relationship where no other intervening elements are present between the first and second elements as well as an indirect relationship where one or more intervening elements are present between the first and second elements. Other words used to describe the relationship between elements should be interpreted in a like fashion (e.g., "between" versus "directly between," "adjacent" versus "directly adjacent," etc.). As used herein, the term "and/or" includes any and all combinations of one or more of the associated listed items.

The term "set" does not necessarily exclude the empty set - in other words, in some circumstances a "set" may have zero elements. The term "non-empty set" may be used to indicate exclusion of the empty set - in other words, a non-empty set will always have one or more elements. The term "subset" does not necessarily require a proper subset. In other words, a "subset" of a first set may be coextensive with (equal to) the first set. Further, the term "subset" does not necessarily exclude the empty set - in some circumstances a "subset" may have zero elements.

The terms first, second, third, etc. may be used herein to describe various elements, components, regions, layers and/or sections. These elements, components, regions, layers and/or sections should not be limited by these terms. These terms may be only used to distinguish one element, component, region, layer or section from another region, layer or section. Terms such as "first," "second," and other numerical terms do not imply a sequence or order unless clearly indicated by the context. Thus, a first element, component, region, layer or section discussed below could be termed a second element, component, region, layer or section without departing from the teachings of the example configurations.

The phrase "at least one of A, B, and C" should be construed to mean a logical (A OR B OR C), using a non-exclusive logical OR, and should not be construed to mean "at least one of A, at least one of B, and at least one of C." The phrase "at least one of A, B, or C" should be construed to mean a logical (A OR B OR C), using a non-exclusive logical OR.

The following Clauses provide an exemplary configuration for a seal assembly, as described above.

Clause 1: A retainer for a seal assembly, the retainer comprising: a base including an inner surface defining an aperture; a protrusion extending from the inner surface; and a flange extending outwardly from the base, the flange defining an outer surface including opposing flat surfaces.

Clause 2: The retainer of clause 1, wherein the base includes a set of flexible locking arms.

Clause 3: The retainer of clause 2, wherein: the retainer is configured for connection to a substrate; and the set of flexible locking arms is configured to inhibit removal of the retainer from the substrate.

Clause 4: The retainer of any of clauses 1 through 3, wherein: the retainer is configured for connection to an additional retainer having an opening; and the protrusion is configured to be received by the opening of the additional retainer.

Clause 5: The retainer of any of clauses 1 through 4, wherein the opposing flat surfaces are configured to be engaged by a robot when the retainer is being connected to a substrate or an additional retainer.

Clause 6: The retainer of any of clauses 1 through 5, wherein the flange defines a channel configured to receive an annular seal.

Clause 7: A retainer for a seal assembly, the retainer comprising: a base including: an outer surface; an inner surface opposite the outer surface, the inner surface defining an aperture; and an end surface extending between the outer surface and the inner surface, the end surface defining an opening, and the outer surface defining a groove in communication with the opening; and a flange extending outwardly from the base, the flange defining a second outer surface, and the second outer surface including opposing flat surfaces.

Clause 8: The retainer of clause 7, wherein: the retainer is configured for connection to an additional retainer; the opening is configured to receive a protrusion of the additional retainer; and the groove is configured to translatably-receive the protrusion.

Clause 9: The retainer of clause 7 or 8, wherein: the retainer is configured for connection with a third retainer; and the aperture receives the third retainer.

Clause 10: The retainer of any of clauses 7 through 9, wherein the opposing flat surfaces are configured to be engaged by a robot when the retainer is being connected to an additional retainer.

Clause 11: A seal assembly comprising: a first retainer including: a first base including a first inner surface defining a first aperture; and a protrusion extending from the first inner surface; and a second retainer configured for removable connection with the first retainer and including a second base having: an outer surface; a second inner surface opposite the outer surface, the second inner surface defining a second aperture; and an end surface extending between the outer surface and the second inner surface, the end surface defining an opening configured to receive the protrusion, the outer surface defining a groove in communication with the opening and configured to translatably-receive the protrusion upon rotation of the second retainer relative to the first retainer.

Clause 12: The seal assembly of clause 11, wherein one of the first retainer or the second retainer includes a first flange extending outwardly therefrom.

Clause 13: The seal assembly of clause 12, further comprising an annular seal coupled to the first flange.

Clause 14: The seal assembly of clause 13, wherein the other of the first retainer or the second retainer includes a second flange extending outwardly therefrom.

Clause 15: The seal assembly of clause 13, further comprising a third retainer, wherein the first aperture and the second aperture are configured to receive the annular seal upon removably-connecting the first retainer to the second retainer.

Clause 16: The seal assembly of any of clauses 11 through 15, wherein: the first retainer is configured for connection to a substrate; and in an assembled configuration, the substrate surrounds the first base and the second base.

Clause 17: The seal assembly of any of clauses 11 through 16, wherein the first base includes a flexible locking arm having an outwardly-extending tab configured to engage a substrate.

Clause 18: The seal assembly of any of clauses 11 through 17, wherein: the first retainer includes a flange extending outwardly from the first base; the flange defines opposing flat surfaces; and the opposing flat surfaces are configured to be engaged by a robot when the first retainer is being connected to a substrate or the second retainer.

Clause 19: The seal assembly of any of clauses 11 through 17, wherein: the second retainer includes a flange extending outwardly from the second base; the flange defines opposing flat surfaces; and the opposing flat surfaces are configured to be engaged by a robot when the second retainer is being connected to the first retainer.

Clause 20: A vehicle (24) comprising: the seal assembly (10) of any of clauses 11 through 19.

## Claims

1. A retainer for a seal assembly (10), the retainer comprising:
a base (30) including an inner surface (36) defining an aperture (38);
a protrusion (34) extending from the inner surface (36); and
a flange (32) extending outwardly from the base (30), the flange (32) defining an outer surface (50) including opposing flat surfaces.

2. The retainer of claim 1 wherein the base (30) includes a set of flexible locking arms (40), wherein preferably:
the retainer is configured for connection to a substrate (26); and
the set of flexible locking arms (40) is configured to inhibit removal of the retainer from the substrate (26).

3. The retainer of any one of the preceding claims wherein:
the retainer is configured for connection to an additional retainer having an opening (82); and
the protrusion (34) is configured to be received by the opening (82) of the additional retainer.

4. The retainer of any one of the preceding claims wherein the opposing flat surfaces are configured to be engaged by a robot (60) when the retainer is being connected to a substrate (26) or an additional retainer.

5. The retainer of any one of the preceding claims wherein the flange defines a channel (52, 92) configured to receive an annular seal (16).

6. A retainer for a seal assembly (10), the retainer comprising:
a base (30, 70, 100) including:
an outer surface (50, 74, 90);
an inner surface (36, 76, 106) opposite the outer surface (50, 74, 90), the inner surface (36, 76, 106) defining an aperture (38, 80, 108, 110); and
an end surface (78) extending between the outer surface (50, 74, 90) and the inner surface (36, 76, 106), the end surface (78) defining an opening (82), and the outer surface (50, 74, 90) defining a groove (84) in communication with the opening (82); and
a flange (32, 72, 102) extending outwardly from the base (30, 70, 100), the flange (32, 72, 102) defining a second outer surface, and the second outer surface including opposing flat surfaces.

7. A seal assembly (10) comprising:
a first retainer (12) including:
a first base including a first inner surface defining a first aperture; and
a protrusion (34) extending from the first inner surface; and
a second retainer (14) configured for removable connection with the first retainer (12) and including a second base (70) having:
an outer surface (74);
a second inner surface (76) opposite the outer surface (74), the second inner surface defining a second aperture (80); and
an end surface (78) extending between the outer surface (74) and the second inner surface, the end surface (78) defining an opening (82) configured to receive the protrusion (34), the outer surface (74) defining a groove (84) in communication with the opening (82) and configured to translatably-receive the protrusion (34) upon rotation of the second retainer (14) relative to the first retainer (12).

8. The seal assembly (10) of claim 7 wherein one of the first retainer (12) or the second retainer (14) includes a first flange extending outwardly therefrom,
wherein the assembly (10, 22) preferably further comprises an annular seal (16) coupled to the first flange.

9. The seal assembly (10) of claim 8 wherein the other of the first retainer (12) or the second retainer (14) includes a second flange extending outwardly therefrom.

10. The seal assembly (10) of claim 8 or 9 further comprising a third retainer (18),
wherein the first aperture and the second aperture are configured to receive the annular seal (16) upon removably-connecting the first retainer (12) to the second retainer (14).

11. The seal assembly (10) of any one of the preceding claims 7 to 10
wherein:
the first retainer (12) is configured for connection to a substrate (26); and
in an assembled configuration, the substrate (26) surrounds the first base and the second base.

12. The seal assembly (10) of any one of the preceding claims 7 to 11 wherein the first base includes a flexible locking arm (40) having an outwardly-extending tab (42) configured to engage a substrate (26).

13. The seal assembly (10) of any one of the preceding claims 7 to 12
wherein:
the first retainer (12) includes a flange (32) extending outwardly from the first base;
the flange defines opposing flat surfaces; and
the opposing flat surfaces are configured to be engaged by a robot (60) when the first retainer (12) is being connected to a substrate (26) or the second retainer (14).

14. The seal assembly (10) of any one of the preceding claims 7 to 13 wherein:
the second retainer (14) includes a flange (72) extending outwardly from the second base (50);
the flange defines opposing flat surfaces; and
the opposing flat surfaces are configured to be engaged by a robot (60) when the second retainer (14) is being connected to the first retainer (12).

15. A vehicle (24) comprising:
The retainer or the seal assembly (10) of any one of the preceding claims.
